# EUROPÄISCHE PATENTSCHRIFT

(11) **EP 0 739 797 B1**
(45) Veröffentlichungstag und Bekanntmachung des Hinweises auf die Patenterteilung: **21.11.2001**
(21) Anmeldenummer: 96102244.9
(22) Anmeldetag: 15.02.1996
(51) Int. Cl.: B60T 13/68, B60T 15/14

(54) **Proportionalmagnetventil für Bremsanlagen von Schienfahrzeugen**
Proportional magnetic valve for brake systems on rail vehicles
Electrovalve proportionelle pour installations de freinage de véhicules sur rails

(30) Priorität: 27.04.1995 DE 19514858
(43) Veröffentlichungstag der Anmeldung: 30.10.1996
(73) Patentinhaber: KNORR-BREMSE Systeme für Schienenfahrzeuge GmbH, 80809 München (DE); Oerlikon-Knorr Eisenbahntechnik AG, 8155 Niederhasli (CH)
(72) Erfinder: Breinl, Walter, Dr., D-80997 München (DE); Epp, Nikolaus, CH-8050 Zürich (CH)

(56) Entgegenhaltungen:
- EP-A- 0 590 515
- WO-A-91/15388
- WO-A-93/23273
- WO-A-93/23274
- WO-A-94/18044

## Beschreibung

Die Erfindung betrifft ein Proportionalmagnetventil nach dem Gattungsbegriff des Patentanspruches 1.

Bei Bremssystemen für Schienenfahrzeuge ist es eine grundlegende Aufgabe, das Bremsanforderungssignal in die entsprechende Bremskraft umzusetzen. Bei einer elektropneumatischen Bremssteuerung wird dabei ein elektrisches Signal in einen pneumatischen Druck umgesetzt, welcher über den Bremszylinder die geforderte Bremskraft erzeugt. Kernstück bei derartigen Bremssystemen ist ein Proportionalventil, welches einen Strom in einen proportionalen, pneumatischen Druck umsetzt. Die Genauigkeit und Regulierbarkeit des Bremssystems wird dabei im wesentlichen durch die Linearität und die Hysterese des Proportionalventiles bestimmt.

Derartige Ventile können direkt proportional ausgeführt werden, d. h. mit ansteigendem Strom bzw. ansteigender Spannung steigt auch der Druck an, oder mit einer Feder versehen umgekehrt proportional , d. h., liegt kein Strom an, stellt sich maximaler Druck ein, und liegt maximaler Strom an, ist der ausgesteuerte Druck gleich Null. Solche Proportionalventile werden auch für das sogenannte Blending eingesetzt, d. h. für Abstimmung verschiedener Bremssysteme wie der dynamischen Bremse und der Reibungsbremse.

Proportionalventile der in Rede stehenden Art bestehen im wesentlichen aus einem Magneten und einem Pneumatikteil. Über die Kraft des Magneten wird dabei ein Kolben betätigt, der über einen Ventilsitz Druckluft von einem Druckluftvorrat zum Verbraucher (z. B. Relaisventil und Bremszylinder) strömen läßt bzw. diesen Druck zur Atmosphäre hin entlüftet. Da der Druck am Verbraucher auch zugleich auf eine Kolbenfläche wirkt, die wiederum mit der Kraft des Magneten im Gleichgewicht steht, kann auf diese weise proportional zum elektrischen Signal am Magneten (Strom oder Spannung) der Druck am Verbraucher gesteuert werden. Bedingt durch das Material des Magneten und dessen Bauart ist die Kraft-, Strom-, (Spannungs-) kennlinie nichtlinear, besonders im unteren Bereich geringen Stroms. Ebenso stellt sich zwischen dem Kraftaufbau und dem Kraftabbau eine Hysterese ein, d. h. es stellt sich für den gleichen Stromwert ein unterschiedlicher Kraftwert ein, je nachdem, ob der Strom zuvor größer oder kleiner war. Die pneumatische Gegenkraft, die durch den Druck und die Kolbenfläche bestimmt wird, kann hingegen als weitgehend linear angenommen werden. Das Problem nichtlinearen Verhaltens gilt auch für ein umgekehrt proportional wirkendes Ventil mit einer zusätzlichen Feder, bei welcher drei Kräfte im Gleichgewicht sind, nämlich Federkraft, Magnetkraft und pneumatische Druckkraft.

Aus der WO 91 15388 ist eine elektrisch betätigte Ventilanordnung bekannt, welche ein Stellglied, das auf Rückführdruck von einer Bremse anspricht, enthält, um den Druck in der Bremse proportional zu einem dem Stellglied zugefuhrten elektrischen Signal zu regeln. Außerdem enthält diese elektrisch betätigte Ventilanordnung ein Einlaßventil, das eine Zuführkammer zur Aufnahme von Einlaßdruck und eine Lieferkammer zur Übermittlung von Druck zur Bremse enthält, wobei das Stellglied das Einlaßventil in Abhängigkeit von dem elektrischen Signal offnet, um der Bremse gesteigerten Druck zuzuführen. Die vorabgenannte Ventilanordnung enthält weiterhin ein Steuerventil, das die Lieferkammer mit einer Entlastungskammer verbindet, um die Lieferkammer zu entleeren, wobei das Stellglied das Steuerventil entgegen dem Rückführdruck schließt, um der Bremse gesteigerten Druck zuzuführen. Ein weiteres Entlüftungsventil verbindet die Entlastungskammer mit einer primären Auslaßöffnung, wobei das Stellglied das Entlüftungsventil in Abhängigkeit von dem der Bremse gesteigerten Druck zu führenden elektrischen Signal öffnet. Diese elektrisch betätigte Ventilanordnung findet in einem automatischen Bremssystem seine Verwendung, wobei durch Bewegung eines Stellgliedes in Abhängigkeit von einem elektrischen Signal einem Bremszylinder ein Vorrat an Druckluft zugeführt wird. Der vorbestimmte Luftdruckvorrat im Bremszylinder wird proportional zu dem dem Stellglied zugeführten elektrischen Signal aufrechterhalten. Ein trennen der Zuführung von Druckluft zum Bremszylinder erfolgt in Abhängigkeit von einer Luftdruckgröße, die auf das Stellglied wirkt und dabei die Kraft überwindet, die von dem Stellglied aufgebracht wird. Ein Ablassen des Luftdrucks aus dem Bremszylinder erfolgt durch eine primäre Auslaßöffnung mit begrenzter Strömungsrate in Abhängigkeit von einer Luftdruckgröße, die auf das Stellglied einwirkt und die von dem Stellglied ausgeübte Kraft überschreitet, wobei in weiteren Schritten eine Abgabe des Luftdruckes aus dem Bremszylinder durch eine sekundäre Ablaßöffnung mit einer höheren Strömungsrate in Abhängigkeit von einer vorbestimmten Luftdruckgröße zwischen dem Stellglied und der primären Auslaßöffnung erfolgt, wobei diese vorbestimmte Luftdruckgröße die der begrenzten Strömungsrate entsprechende Luftdruckgröße überschreitet.

Aus der WO 9323274 ist ein druckkompensiertes Proportionalregelventil zum Regeln von Fluiddruck über eine Fluidstromverengung in einem damit verbundenen Verbraucher mit geschlossenen Volumen bekannt. Das Proportionalregelventil weist dabei ein Gehäuse auf, eine Arbeitsöffnung innerhalb dieses Gehäuses zur Verbindung mit dem Verbraucher mit geschlossenem Volumen über eine Zufuhrleitung und einen ersten Durchgang innerhalb des Gehäuses, der eine Einlaßöffnung mit der Arbeitsöffnung verbindet, um den Fluiddruck im Verbraucher mit geschlossenem Volumen zu erhöhen. Dieses Proportionalregelventil weist weiterhin einen zweiten Durchgang innerhalb des Gehäuses auf, der die Arbeitsöffnung mit einer Auslaßöffnung verbindet, um den Fluiddruck im Verbraucher mit geschlossenem Volumen zu senken. Ein erstes Ventil regelt den ersten Durchgang der Fluidströmung, während ein zweites Ventil den zweiten Durchgang der Fluidströmung regelt. Ein bewegliches Stellglied, welches auf ein Steuersignal reagiert, öffnet ein erstes Ventil und schließt ein zweites Ventil, damit der Fluiddruck am Verbraucher mit geschlossenem Volumen erhöht wird desgleichen wird durch dieses Stellglied das erste Ventil geschlossen und das zweite Ventil geöffnet, damit der Fluiddruck am Verbraucher mit geschlossenem Volumen verringert wird. Das Ventil weist dabei eine Sensoröffnung innerhalb des Gehäuses auf, die die Arbeitsöffnung sein kann und stromabwärts von der Verengung über einen Rückkopplungsdurchgang mit dem Verbraucher mit geschlossenem Volumen verbunden ist. Das zweite Ventil ist über einen Plunger mit einem doppeltwirkenden Zylinder verbunden, wobei eine Fläche des doppeltwirkenden Zylinders dem Druck der Sensoröffnung ausgesetzt ist. Die gegenüberliegenden Flächen des doppelwirkenden Zylinders des ersten Ventiles sind dem Verbraucherdruck ausgesetzt. Der Plunger überträgt eine Kraft vom doppeltwirkenden Zylinder nur auf das zweite Ventil, um das zweite Ventil zu öffnen oder zu schließen.

Davon ausgehend besteht die Aufgabe der Erfindung darin, ein Proportionalventil der in der Rede stehenden Art so auszugestalten, daß trotz nichtlinearen Verhaltens im Bereich geringer Bestromung des Magneten ein linearer oder angenähert linearer Druckverlauf des ausgesteuerten Druckes erzielbar ist.

Zur Lösung dieser Aufgabe dienen die Merkmale nach dem Kennzeichnungsteil des Patentanspruches 1.

Dem Proportionalmagnetventil liegt zugrunde, daß die nichtlineare Kennlinie des Magneten durch eine entgegengesetzte, pneumatische Kennlinie kompensiert wird, daß also eine Korrektur des Druckverlaufes des ausgesteuerten Druckes herbeigeführt wird. Dies geschieht durch einen Ventilkolben mit veränderlich wirksamer Kolbenfläche, wobei durch die wirksame Kolbenfläche die Steigerung der Kennlinie des ausgesteuerten Druckes beeinflußt wird. Die Kennlinie kann demnach je nach Flächenänderung gestaltet werden, mit anderen Worten, die nichtlineare Magnetkennlinie wird durch eine nichtlineare, pneumatische Kennlinie nach Maßgabe der Flächenänderung korrigiert.

Die verwendeten Mittel zur Kompensierung des nichtlinearen Magnetverhaltens sind bei einem Ventil der in Rede stehenden Art leicht darstellbar, d. h. entweder bedient man sich eines Flächenwechsels mittels zweier, konzentrisch zueinander befindlicher Kolben oder es wird nach dem Fächerkolbenprinzip gearbeitet, bei welchem eine im wesentlichen stufenlose Wirkflächenveränderung und damit Kompensierung des Kennlinienverlaufes erreichbar ist.

Vorteilhafte Ausgestaltungen und Weiterbildungen sind in weiteren Patentansprüchen aufgeführt.

Die Erfindung ist nachfolgend anhand von Ausführungsbeispielen unter Bezugnahme auf die beigefügte Zeichnung erläutert.
Fig. 1 ist eine Schnittansicht eines erfindungsgemäßen Proportionalmagnetventiles, unter Darstellung der Aufteilung des Ventilkolbens in einen inneren und einen äußeren Kolben;
Firg. 2 ist eine Darstellung des Kennlinienverlaufes des ausgesteuerten Druckes, wobei Kurve 1 den Verlauf unter Zugrundelegung eines großen Kolbendurchmessers wiedergibt, während die Kurve 2 die Kennlinie unter Zugrundelegung eines kleinen Kolbendurchmessers des Ventilkolbens wiedergibt;
Fig. 3 ist die Darstellung der Kennlinie, welche im Bereich nichtlinearen Magnetverhaltens durch die Teil-Kennlinie der Kurve 2 und im Bereich linearen Magnetverhaltens durch die Teil-Kennlinie gemäß Kurve 1 gebildet ist;
Fig. 4 ist eine der Fig. 1 vergleichbare Schnittansicht eines Proportionalmagnetventiles gemäß einer weiteren Ausführungsform nach der Erfindung.

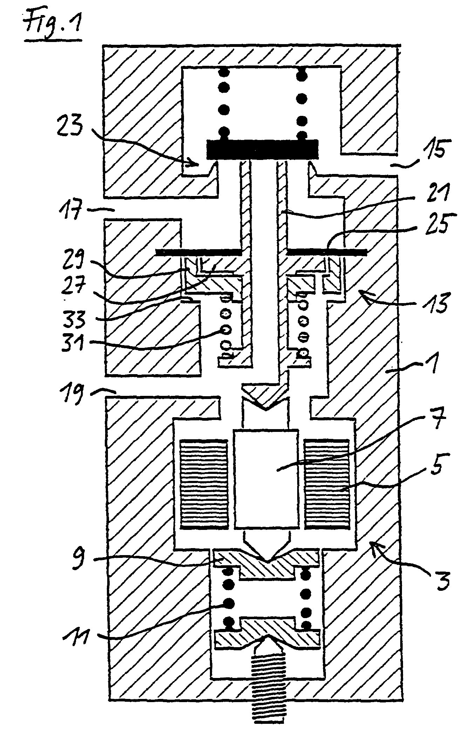

Das in Fig. 1 der Zeichnung dargestellte Proportionalmagnetventil gemäß der Erfindung weist innerhalb eines Gehäuses 1 einen Ventilmagneten 3 mit Spule 5 und Anker 7, eine das Lager 9 des Ankers 7 beaufschlagende Feder 11 und einen bei Längsbewegungen des Ankers durch diesen betätigbaren Ventilteil 13 auf. Am Gehäuse 1 befindet sich ein Anschluß 15 für Vorratsdruckluft, ein Anschluß 17, welcher an den Verbraucher des Proportionalmagnetventiles angeschlossen ist, und ein zur Außenluft führender Anschluß 19. Ein Ventilstößel 21 des Ventilteils 13 wirkt in an sich bekannter Weise gegenüber einem Ein- und Auslaßventil 23, welches nach Maßgabe der Betätigung durch den Ventilstößel den Anschluß 15 mit dem Anschluß 17 oder den Anschluß 17 mit dem Anschluß 19 verbindet oder welches die in Fig. 1 der Zeichnung dargestellte Abschlußstellung einnimmt. Der Ventilstößel 21 wird von einer Membrane 25 getragen, welche im Gehäuse 1 eingespannt ist und bei Druckbeaufschlagung auf zwei Kolben 27 und 29 einwirkt, welche mit dem Ventilstößel verbunden sind bzw. sich an diesem mittels einer Feder 31 abstützen.

Erfindungsgemäß wurde die Aufteilung der von der Membrane beaufschlagten Kolbenfläche in eine innere Ringfläche des Kolben 27 und eine äußere Ringfläche des Kolbens 29 vorgenommen. Bei der in Fig. 1 wiedergegebenen Position wirken die beiden Kolben 27 und 29 als eine Flächeneinheit; wird der dem Verbraucher über den Anschluß 17 zugeleitete Druck entsprechend reduzierter Erregung des Ventilmagneten über einen vorherbestimmbaren Wert (Schaltpunkt S) erhöht, dann vermag er über die Membrane 25 wirkend, den äußeren Kolben 29 gegen die Kraft der Feder 31 relativ zum inneren Kolben 27 nach unten gerichtet zu drücken, derart, daß der äußere Kolben 29 am gehäuseseitigen Anschlag 33 zur Anlage kommt, wie nachfolgend erläutert ist. Hierdoch ist die Wirkfläche des äußeren Kolbens 29 ausgeschaltet, so daß dem Ventilmechanismus beim Abwiegen der Kräfte nur noch die innere Ringfläche des inneren Kolbens 27 zur Verfügung steht.

Das beispielhaft dargestellte Proportionalmagnetventil ist von umgekehrt proportionaler Wirkungsweise, d. h. die Betätigung des Ventiles erfolgt durch die Feder 11 und die der Feder 11 entgegenwirkende Kraft wird durch den Ventilmagneten 3 und die auf die Membrane 25 einwirkende Reaktionskraft der ausgesteuerten Druckluft erzeugt. Maximaler Druck am Anschluß 17, d. h. am Verbraucher, liegt demnach bei nicht erregtem Ventilmagneten 3 vor. Durch Erregung des Ventilmagneten d. h. seiner Spule 5 wird in Gegenwirkung zur Kraft der Feder 11 eine Reduzierung des ausgesteuerten Druckes erreicht. Im Gegensatz hierzu wird bei direkt proportionalen Magnetventilen (nicht dargestellt) eine Druckerhöhung nach Maßgabe zunehmenden Spulenstromes erreicht, d. h. derartige Ventile sind ohne Feder 11 ausgebildet.

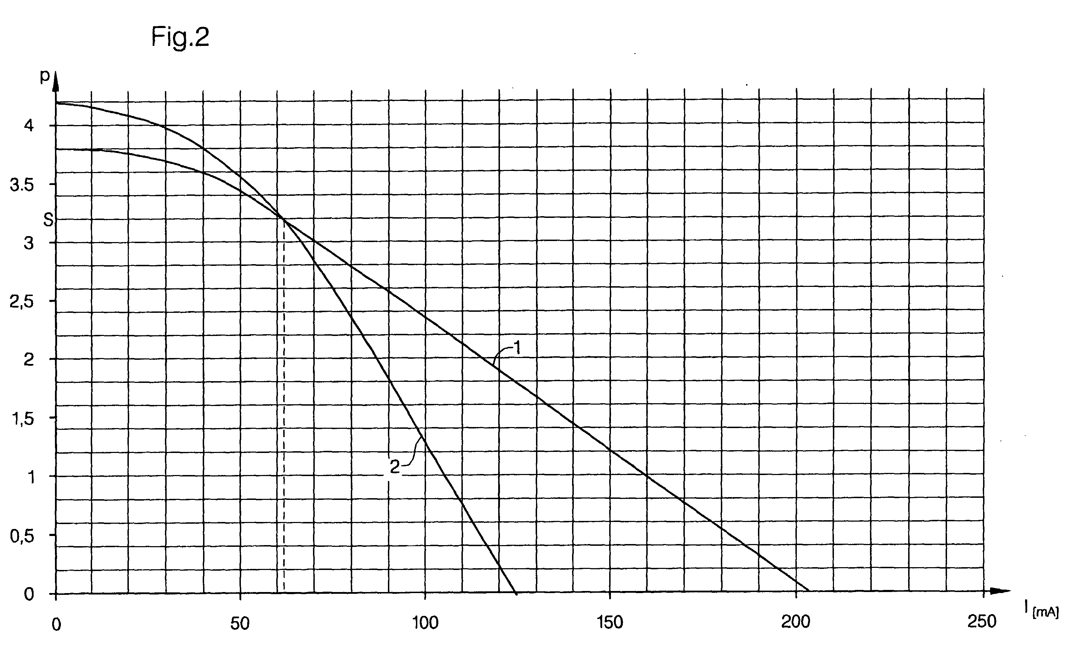

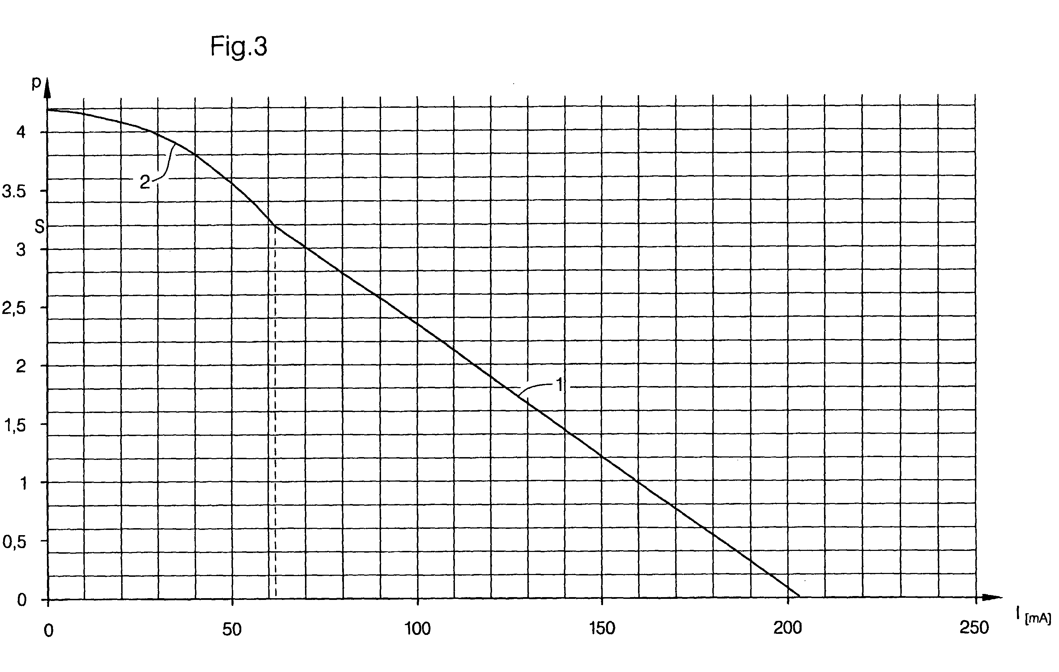

In den Fig. 2 und 3 ist der mit Hilfe der erfindungsgemäßen Ausgestaltung des Ventilteiles 13 (Kolben 27 und 29) erzielbare Druckverlauf des aussteuerbaren Druckes wiedergegeben: Die Kurve 1 nach Fig. 2 gibt bei Gegenüberstellung des ausgesteuerten Druckes p und des Spulenstromes I den nahezu linearen Druckverlauf dar, welcher zwischen dem Schaltpunkt S, entsprechend einem ausgesteuerten Druck von ca. 3,2 bar und einem ausgesteuerten Druck von 0 bar, entsprechend einem Spulenstrom von etwas über 200 mA entspricht. Unterhalb des Spulenstromes von ca. 62 mA, d.h. zwischen einem Strom von 0 mA und 62 mA, ist eine Abflachung der Kurve 1 infolge nichtlinearen Verhaltens des Ventilmagneten 3 festzustellen.

Die des weiteren in Fig. 2 wiedergegeben Kurve 2 entspricht einer Auslegung des Proportionalmagnetventiles mit kleinerem Durchmesser der Wirkfläche der Membrane, d.h. ausschließlich unter Zugrundelegung des Wirkdurchmessers des inneren Kolbens 27. Es ist ersichtlich, daß der Kurvenverlauf der Kurve 2 nach Durchdringung der Kurve 1 oberhalb derselben endet, etwa bei einem ausgesteuerten Druck von z. B. 4,2 bar. Auch die Kurve 2 läßt das nichtlineare Verhalten des Ventilmagneten 3 erkennen. Ausgehend von dieser Erkenntnis wurde durch das erfindungsgemäße Proportionalmagnetventil nach Fig. 1 erreicht, daß bei funktioneller Folge der beiden Kurven 1 und 2 der Kurvenverlauf nach Fig. 3 erreicht wird. Wie vorstehend erwähnt ist, wirkt oberhalb eines dem Schaltpunkt S entsprechenden Druckes am Verbraucher, d.h. am Anschluß 17, dieser derart auf den äußeren Kolben 29 ein, daß sich dieser, der Durchbiegung der Membrane 25 folgend an den Anschlag 33 anlegt, wodurch die Rückwirkung des äußeren Kolbens ausgeschaltet ist. Im Druckbereich unterhalb des Schaltpunktes S wirken die beiden Kolben 27 und 29 als eine Einheit, demnach wird im wesentlichen der Druckverlauf auf der Kurve 1 ausgesteuert. Beide Teilkurven ergeben den in Fig. 3 der Zeichnung wiedergegebenen Gesamtverlauf, bei welchem im Druckbereich oberhalb des Schaltpunktes S dem nichtlinearen Verhalten des Magneten durch Veränderung des Druckverhaltens im Pneumatikteil entgegengesteuert wurde.

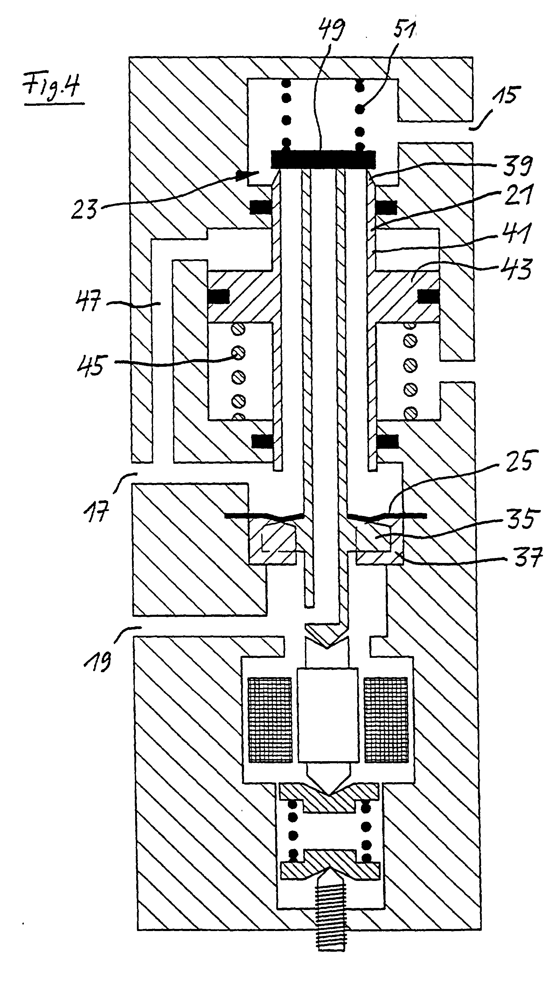

Das Prinzip der Wirkflächenveränderung an der Membrane ist auch unter Verwendung des an sich bekannten Fächerkolbenprinzipes (Fig. 4) verwirklichbar. Die Membrane 25 stützt sich bei dieser Anordnung an vom Ventilstößel radial sich erstreckenden Rippen 35 ab, welche fächerförmig zwischen feststehende Rippen 37 eingreifen, wodurch in Abhängigkeit von der Höhenlage des Ventilstößels eine stufenlose Veränderung der Wirkfläche der Membrane erreichbar ist. Befindet sich die Membrane 25 in einer gegenüber der Darstellung nach Fig. 4 höheren Position, dann stützt sie sich im wesentlichen gesamtflächig auf den Rippen 35 ab. Tauchen die Rippen 35 indessen in stärkerem Maße in die fächerförmig sie aufnehmenden Rippen 37 eim, d. h. ist also der Ventilstößel in einer tieferen Position, dann stützt sich die Membrane 25 auf einer kleineren Wirkfläche der Rippen 35 ab. Eine derartige Wirkflächenveränderung entspricht im wesentlichen dem Wirkprinzip nach Fig. 1, welches nach Schaltstufen abläuft. Zur Erzielung der vorstehend genannten Wirkflächenveränderung ist das als Doppelsitzventil ausgebildete Ein- und Auslaßventil 23 mit einer Anordnung versehen, welche eine druckabhängige Lageveränderung der Öffnungs- und Schließpositionen des Ventils ermöglicht. Zu diesem Zwedk ist der Einlaßsitz 39 des Ein- und Auslaßventiles 23 im Gegensatz zur Anordnung nach Fig. 1 nicht feststehend, sondern auf einer höhenverschieblich geführten Hülse 41 angeordnet. Die Hülse 41 trägt einen Schaltkolben 43, welcher gegen die Kraft einer Feder 45 wirkend über einen Kanal 47 vom ausgesteuerten Druck am Anschluß 17 beaufschlagbar ist, derart, daß die Hülse 41 und somit der Einlaßsitz 39 gemäß Darstellung in Fig. 4 nach unten verlagert werden, wenn eine Druckerhöhung vorliegt. Der gegenüber dem Ein- und Auslaßventil 23 wirkende Ventilkörper 49 ist durch eine Feder 51 verspannt und folgt der vorgenannten Relativbewegung der Hülse 41. Der mit Hilfe der Anordnung nach Fig. 4 erzielbare Druckverlauf ist in einer der Ausführung nach den Fig. 1-3 vergleichbaren Weise gestaltet, d. h. in einem Druckbereich, in welchem nichtlineares Verhalten des Ventilmagneten 3 in Kauf zu nehmen ist, erfolgt ein Gegensteuern im pneumatischen Teil des Magnetventiles13 in Form einer Korrektur entsprechend Flächenveränderung an der Membrane 25.

### Bezugszeichenliste

- 1: Gehäuse
- 3: Ventilmagnet
- 5: Spule
- 7: Anker
- 9: Lager
- 11: Feder
- 13: Ventilteil
- 15: Anschluß
- 17: Anschluß
- 19: Anschluß
- 21: Ventilstößel
- 23: Ein- und Auslaßventil
- 25: Membrane
- 27: Kolben
- 29: Kolben
- 31: Feder
- 33: Anschlag
- 35: Rippe
- 37: Rippe
- 39: Einlaßsitz
- 41: Hülse
- 43: Schaltkolben
- 45: Feder
- 47: Kanal
- 49: Ventilkörper
- 51: Feder

## Patentansprüche

1. Proportionalmagnetventil für Bremsanlagen von Schienenfahrzeugen, mit einem direkt oder indirekt proportional wirkenden Ventilmagneten, welcher einen gegenüber einem Ein- und Auslaßventil für Druckluft wirkenden Ventilteil beaufschlagt, derart, daß sich mit Änderung der Strom- bzw. Spannungsgröße der vom Ventilteil ausgesteuerte Druck ändert, **dadurch gekennzeichnet, daß** der vom ausgesteuerten Druck des Proportionalmagnetventils beaufschlagte, der Magnetkraft pneumatisch entgegenwirkende Ventilteil (13) Mittel zur Veränderung seiner druckbeaufschlagten Wirkfläche aufweist, derart, daß bei Unterschreiten eines vorbestimmbaren Strom-bzw. Spannungswertes des Ventilmagneten eine nichtlineare pneumatische Gegenkraft zur Kompensierung des nichtlinearen Magnetverhaltens erzeugbar ist, um einen linearen oder angenähert linearen Druckverlauf des ausgesteuerten Druckes zu erzielen.

2. Proportionalmagnetventil nach Anspruch 1, bei welchem die Wirkfläche des Ventilteils an einer Membrane gebildet ist, **gekennzeichnet durch** folgende Merkmale:
a) die vom ausgesteuerten Druck beaufschlagbare Membrane (25) stützt sich an einem inneren Kolben (27) und einem diesen umgebenden äußeren Kolben (29) ab;
b) der innere Kolben (27) wird von einem gegenüber dem Ein- und Auslaßventil (23) wirkenden Ventilstößel (21) getragen;
c) der äußere Kolben (29) wird unter Verspannung einer Feder (31) gleichfalls vom Ventilstößel (21) getragen; und
d) der äußere Kolben (29) ist wegabhängig an einen Anschlag (33) anlegbar, derart, daß bei Überschreiten einer **durch** die Kraft der Feder (31) bestimmbaren Größe des ausgesteuerten Druckes der äußere Kolben (29) in Anlage an den Anschlag (33) bewegbar ist und sich unter Veränderung der pneumatischen Kennung die Wirkfläche der Membrane entsprechend verkleinert.

3. Proportionalmagnetventil nach Anspruch 2, **dadurch gekennzeichnet, daß** die Membrane (25) an ihrem Innenumfang an dem durch sie hindurchgeführten Ventilstößel (21) und an ihrem Außenumfang am Gehäuse des Proportionalmagnetventils befestigt ist, und daß der Anschlag (33) für den radial äußeren Kolben (29) durch eine innenseitige Schulter des Gehäuses des Proportionalmagnetventils gebildet ist.

4. Proportionalmagnetventil nach Anspruch 1, **dadurch gekennzeichnet, daß** der vom ausgesteuerten Druck beaufschlagte Ventilteil eine Wirkfläche aufweist, welche nach dem Fächerkolbenprinzip veränderbar ist, derart, daß eine pneumatische Gegenkraft des Ventilteils mit nichtlinearer Kennung aussteuerbar ist.

## Claims

1. Proportional solenoid valve for brake installations in rail vehicles, having a valve magnet operating directly or indirectly proportionally, which acts on a valve portion operating with respect to an inlet and outlet valve for compressed air, in such a way that when the current or voltage variable is changed, the pressure controlled by the valve portion changes, **characterised in that** the valve portion (13) acted on by the controlled pressure of the proportional solenoid valve and pneumatically counteracting the magnetic force has means for changing its pressure-loaded working surface so that when a specific current or voltage value of the valve magnet is not attained, a non-linear pneumatic counter-force can be produced to compensate for the non-linear solenoid behaviour so as to obtain a linear, or approximately linear, pressure response of the controlled pressure.

2. Proportional solenoid valve according to claim 1, in which the working surface of the valve portion is formed on a diaphragm, **characterised by** the following features:
a) the diaphragm (25) which can be acted on by the controlled pressure is supported on an inner piston (27) and an outer piston (29) surrounding it;
b) the inner piston (27) is carried by a valve rod tappet (21) operating with respect to the inlet and outlet valve (23);
c) the outer piston (29) is also carried by the valve tappet (21) with spring loading (31); and
d) the outer piston (29) can come to rest against a stop (33) in a position-dependent manner such that when a variable of the controlled pressure, determinable by the force of the spring (31), is exceeded, the outer piston (29) can be moved into abutment on the stop (33) and the working surface of the diaphragm is correspondingly reduced, changing the pneumatic characteristic.

3. Proportional solenoid valve according to claim 2, **characterised in that** the diaphragm (25) is secured on its inner circumference on the valve tappet (21) guided through it, and on its outer circumference on the housing of the proportional solenoid valve, and **in that** the stop (33) for the radially outer piston (29) is formed by an inside shoulder of the housing of the proportional solenoid valve.

4. Proportional solenoid valve according to claim 1, **characterised in that** the valve portion acted on by the controlled pressure has a working surface which can be changed in accordance with the fan-type piston principle so that a pneumatic counter-force of the valve portion can be controlled with a non-linear characteristic.

## Revendications

1. Soupape magnétique proportionnelle pour installations de freinage de véhicules à déplacement sur rails, comportant un aimant de soupape à action proportionnelle, directe ou indirecte, qui sollicite un élément de soupape agissant vis-à-vis d'une soupape d'admission et d'une soupape d'échappement d'air comprimé, ceci d'une manière telle que la pression modulée par l'élément de soupape se modifie avec une modification de l'amplitude du courant ou de la tension, **caractérisée en ce que** l'élément de soupape (13), qui est sollicité par la pression modulée de la soupape magnétique proportionnelle et qui s'oppose pneumatiquement à la force exercée par l'aimant, comporte des moyens pour modifier sa surface active exposée à la pression, de telle sorte qu'au cas où l'on reste en dessous d'une valeur prédéterminable de courant ou de tension de l'aimant de soupape, une force antagoniste pneumatique, non linéaire, puisse être engendrée pour compenser le comportement non linéaire de l'aimant, afin qu'une loi de variation linéaire ou approximativement linéaire de la pression modulée soit obtenue.

2. Soupape magnétique proportionnelle selon la revendication 1, dans laquelle la surface active de l'élément de soupape est formée sur une membrane, **caractérisée par** les caractéristiques suivantes:
a) la membrane (25), susceptible d'être exposée à la pression modulée, s'appuie sur un piston intérieur (27) et un piston extérieur (29) entourant ce dernier;
b) le piston intérieur (27) est porté par un poussoir de soupape (21) agissant vis-à-vis de la soupape d'admission et d'échappement (23);
c) le piston extérieur (29) est porté également par le poussoir de soupape (21), en étant maintenu en place par la tension d'un ressort (31); et
d) le piston extérieur (29) peut, suivant sa course, s'appliquer contre une butée (33), de telle sorte qu'en cas de dépassement d'une amplitude, prédéterminable par la force du ressort (31), de la pression modulée, le piston extérieur (29) puisse être amené en appui contre la butée (33) et la surface active de la membrane se réduise dans une mesure correspondante, en modifiant la caractéristique pneumatique.

3. Soupape magnétique proportionnelle selon la revendication 2, **caractérisée en ce que** la membrane (25) est fixée, à son pourtour intérieur, au poussoir de soupape (21) dirigé à travers elle et, à son pourtour extérieur, au corps de logement de la soupape magnétique proportionnelle, et **en ce que** la butée (33) destinée au piston radialement extérieur (29) est formée par un épaulement de la face intérieure du corps de logement de la soupape magnétique proportionnelle.

4. Soupape magnétique proportionnelle selon la revendication 1, **caractérisée en ce que** l'élément de soupape, sollicité par la pression modulée, présente une surface active qui est modifiable selon le principe du piston à éventail, de telle sorte qu'une force antagoniste pneumatique de l'élément de soupape puisse être modulée suivant une caractéristique non linéaire.
